(19) **Europäisches Patentamt**

**European Patent Office**

**Office européen des brevets**

(11) **EP 0 948 866 B1**

(12) **EUROPÄISCHE PATENTSCHRIFT**

(45) Veröffentlichungstag und Bekanntmachung des Hinweises auf die Patenterteilung:
**02.05.2003 Patentblatt 2003/18**

(51) Int Cl.$^7$: **H04Q 3/00**, H04M 15/28

(21) Anmeldenummer: **97909249.1**

(86) Internationale Anmeldenummer:
**PCT/EP97/04969**

(22) Anmeldetag: **11.09.1997**

(87) Internationale Veröffentlichungsnummer:
**WO 98/020688 (14.05.1998 Gazette 1998/19)**

(54) **VERFAHREN UND SCHALTUNGSANORDNUNG ZUR TARIFIERUNG IN KOMMUNIKATIONSNETZEN**

RATING PROCESS AND CIRCUITRY FOR COMMUNICATION NETWORKS

PROCEDE ET CIRCUIT DE TARIFICATION DANS DES RESEAUX DE COMMUNICATIONS

(84) Benannte Vertragsstaaten:
**AT BE CH DE DK ES FI FR GB GR IE IT LI LU MC NL PT SE**

(30) Priorität: **07.11.1996 DE 19645868**

(43) Veröffentlichungstag der Anmeldung:
**13.10.1999 Patentblatt 1999/41**

(73) Patentinhaber: **Deutsche Telekom AG**
**53113 Bonn (DE)**

(72) Erfinder: **SCHÖNBORN, Franz**
**D-53105 Bonn (DE)**

(56) Entgegenhaltungen:
| | |
|---|---|
| **EP-A- 0 526 118** | **EP-A- 0 608 066** |
| **EP-A- 0 687 116** | **WO-A-86/06569** |
| **WO-A-94/28670** | **WO-A-94/28683** |
| **DE-A- 3 305 978** | **DE-A- 4 241 762** |
| **DE-A- 19 522 988** | **US-A- 5 317 566** |

- **PATENT ABSTRACTS OF JAPAN vol. 15, no. 40 (E-1028), 30.Januar 1991 & JP 02 276396 A (NEC CORP.), 13.September 1990,**
- **PATENT ABSTRACTS OF JAPAN vol. 17, no. 508 (E-1431), 13.September 1993 & JP 05 130144 A (FUJITSU LTD), 25.Mai 1993,**
- **PATENT ABSTRACTS OF JAPAN vol. 8, no. 247 (E-278), 13.November 1984 & JP 59 123354 A (FUJITSU KK), 17.Juli 1984,**
- **AKSELROD B ET AL: "A SIMULATION STUDY OF ADVANCED ROUTING METHODS IN A MULTIPRIORITY TELEPHONE NETWORK" IEEE TRANSACTIONS ON SYSTEMS, MAN AND CYBERNETICS, Bd. SMC-15, Nr. 6, November 1985, Seiten 730-736, XP002022077**

**Beschreibung**

Die Erfindung betrifft ein Verfahren zur Kommunikationstarifierung in Kommunikationsnetzen nach dem Oberbegriff des Patenanspruchs 1 sowie ein System zur Durchführung des Verfahrens.

In den bekannten analogen Kommunikationsnetzen sind bereits Verfahren zur Kommunikationstarifierung bekannt. Diese Verfahren bieten die Möglichkeit der Verkehrssteuerung im Netz über den Preis. So wurden zum Beispiel sogenannte "Mondscheintarife" in den 80er Jahren eingesetzt, die mit einer starren, in wenige Tarifgruppen unterteilten Tarifstruktur arbeiten. Obwohl durch diese Verfahren grundsätzlich die Möglichkeit der Verkehrssteuerung über den Preis realisiert wurde, ist hierdurch nur eine sehr grobe Verkehrssteuerung möglich, weil die Einteilung in bestimmte zeitabhängige Preisgruppen nicht die tatsächliche Leitungsbelastung berücksichtigt.

Durch die EP-A-0 526 118 A2 ist ein System zur Kommunikationstarifierung in digitalisierten oder analogen Kommunikationsnetzen, die drahtgebunden, funkoder lasergestützt, terrestrisch oder über Satelliten realisiert sind, mit Endgeräten eines rufenden und eines gerufenen Teilnehmers ausgestattet, bekannt geworden, das in dem Kommunikationsnetz die Auslastung von Verbindungsleitungen bzw. -bündeln oberhalb der Anschlussleitung eines Teilnehmers kontinuierlich misst, um diese bei der Tarifierung mit einzubeziehen. Die sich ergebenden Messwerte werden mit Rechnungsalgorithmen in Form von Programmen in speziellen Tarifrechnern gespeichert und auf Abruf zur Verfügung gestellt. Im Bedarfsfall werden die Messwerte von den Tarifrechnern in aktuelle, auf die individuelle Verbindung bezogene Tarife umgerechnet.

Die Programme für die Umrechnung der Messwerte berücksichtigen den Grad der Auslastung für den zu ermittelnden aktuellen und auf eine individuelle Verbindung bezogenen Tarif, wobei der aktuelle und individuelle Tarif am Endgerät des rufenden Teilnehmers angezeigt wird. Die Auslastungsmessung ist allerdings nicht integraler Bestandteil des Vermittlungsknotens und die Berechnung des aktuellen Tarifs wird aus einem Grundentgelt für Ferngespräche und einem aus der Auslastung und der überbrückten Entfernung zusammengesetzten Betrag gebildet. Damit wird der Tarif ausschließlich von technischen Faktoren bestimmt und so wichtige Kundenparameter wie Sprecherverhalten und Kundenfaktor werden nicht berücksichtigt. Daraus ergibt sich eine relativ enge Flexibilisierung in der Gestaltung der Tarife. Außerdem muss nach Wählen der gesamten Nummer und nach der Anzeige des gültigen Tarifs noch eine besondere Taste gedrückt werden. Eine permanente Messung der Auslastung aller Verbindungen auch ohne konkrete Anforderung dieser Messung durch einen rufenden Teilnehmer und die Speicherung der Messwerte in den Vermittlungsknoten ist hier nicht realisierbar.

Außerdem ist in der DE 33 05 978 A1 ein System bekannt geworden, das lediglich feste Tarife zeitvariabel aktiviert bzw. deaktiviert. Hier wird lediglich vorgeschlagen, das auch heute noch verwendete Tarifmodell, das sowohl entfernungs- als auch zeitabhängige Tarifstufen vorsieht, zu flexibilisieren und die Tarifstufen in Abhängigkeit von der gemittelten Gesamtnetzbelastung zu aktivieren.

Der Erfindung liegt deshalb die Aufgabe zugrunde, ein Verfahren zur Kommunikationstarifierung in analogen und digitalisierten Kommunikationsnetzen sowie eine System zur Durchführung des Verfahrens zu schaffen, das den jeweiligen Auslastungsgrad des Kommunikationsnetzes zum Zeitpunkt des jeweiligen Kommunikationswunsches berücksichtigt, so dass bei starker Auslastung der Kommunikationsinfrastruktur die Benutzung bzw. Nutzung des Netzes teurer ist als bei weniger starker Auslastung, wodurch eine kontinuierliche und von der jeweiligen örtlichen und zeitlichen Situation im Netz beeinflussten Verkehrssteuerung eine effektive Auslastungssteuerung erreicht werden soll.

Diese Aufgabe wird für das Verfahren durch die kennzeichnenden Merkmale des Anspruches 1 in Verbindung mit seinen Oberbegriffsmerkmalen und für das System durch die Merkmale des Anspruches 5 gelöst.

Weitere Ausgestaltungen der Erfindung bilden die Gegenstände der Unteransprüche.

Das erfindungsgemäße Verfahren zur dynamischen Kommunikationstarifierung in digitalisierten Kommunikationsnetzen beruht grundsätzlich darauf, dass auf sämtlichen Verbindungen oberhalb der Teilnehmeranschluss-Leitung fortlaufend die jeweiligen Auslastungen in Verkehrsmesseinrichtungen gemessen werden. Die Messwerte werden in einem System in speziellen Tarifrechnern gespeichert und stehen hier auf Abruf zur Verfügung. Die Verkehrsmesseinrichtungen sind mit Tarifrechnern verbunden und bilden mit diesen gemeinsam die Lastmessgruppen.

In den jeweiligen Vermittlungsstellen befinden sich Tarifverknüpfungsrechner, mit deren Hilfe Tarifgewichte der Querwege mit denen des Hauptweges (Kennzahlenweg) nach bestimmten, vom Netzbetreiber zu definierten Parametern verknüpft werden und als neue Tarifgewichte der nächsthöheren Stufe weitergereicht werden. Die eigentlichen Tarifrechner befinden sich an den Endpunkten der Verbindungen in den Endvermittlungsstellen. Dabei ist zu berücksichtigen, dass die Baugruppen entweder als eigene Geräte oder auch als Komponenten, wie zum Beispiel Einschubkarten, in digitalen Vermittlungsstellen realisiert werden können. Abhängig von der Struktur des digitalen Vermittlungssystem können die drei Komponenten der dynamischen Kommunikationstarifierung auch ganz oder teilweise in Software realisiert und in das Programmsystem der Vermittlungsstelle integriert werden.

Das Verfahren bzw. das System der dynamischen Kommunikationstarifierung funktioniert grundsätzlich wie folgt:

1. Auf sämtlichen Verbindungen oberhalb der Teilnehmeranschlussleitung werden fortlaufend die Auslastungen gemessen. Die Messwerte werden in speziellen Tarifrechnern gespeichert und stehen hier auf Abruf zur Verfügung.

2. Der Grad der Auslastung ist ursächlich für den nach einem bestimmten Algorithmus zu ermittelnden aktuellen und auf die individuelle Verbindung bezogenen Tarif. Die Berechnungsalgorithmen sind in Form von Programmen in den Tarifrechnern gespeichert.

3. Der aktuelle und individuelle Tarif wird zum Beispiel auf dem Display des rufenden Apparates angezeigt, nachdem die Kennzahl des Zielortsnetzes - Ortsnetzkennzahl - vollständig gewählt wurde. Unmittelbar nach Eingabe der letzten Ziffer der Ortsnetzkennzahl berechnet der jeweilige Tarifrechner auf der Basis der letzten Verkehrsmessung zu diesem Ziel den augenblicklich gültigen Tarif und bringt ihn auf dem Display des rufenden Apparates zur Anzeige. Hieraus folgt, dass alle Teilnehmer über ein Telefon mit Display verfügen sollten. Die Kommunikation und Anzeige kann jedoch genauso über einen PC, einen angeschlossenen Drucker, ein Faxgerät oder ein anderes Kommunikationsgerät erfolgen. Auch die Ansage über synthetische Sprache ist denkbar und technisch möglich.

4. Wird nach Eingabe der Ortsnetzkennzahl nicht weitergewählt, verhält das System eine gewisse Zeit, zum Beispiel fünf Sekunden, in diesem Angebots-Status, um dem Kunden Zeit zur Entscheidung zu geben, das Gespräch zum angezeigten Tarif entweder zu führen oder den Abbruch der Wahl, zum Beispiel durch Hörerauflegen, zu ermöglichen. Nach Ablauf der "Bedenkzeit" wird die bisherige Wahl vom System her abgebrochen.

5. Wählt der Teilnehmer die Nummer seines Gesprächspartners, wird der angezeigte Tarif der Berechnung der Kommunikationskosten für diese Verbindung zugrunde gelegt.

6. Die tatsächlichen Verbindungskosten werden nach Ende der Verbindung beim rufenden Teilnehmer angezeigt.

7. Die dynamische Kommunikationstarifierung lässt sich auch auf große Ortsnetze anwenden, da sich grundsätzlich alle Ortsgespräche in andere Vermittlungsstellenbereiche dynamisch tarifieren lassen. Sobald der rufende Teilnehmer die Kennzahl der gerufenen Vermittlungsstelle gewählt hat, wird analog zu Fernverbindungen der momentan gültige Tarif vom Tarifrechner an das rufende Endgerät übermittelt und dort angezeigt. Die Fortsetzung der Wahl bewirkt auch hier die Berechnung des Verbindungsentgeltes auf der Basis des angezeigten Tarifes.

Wie bereits grundsätzlich beschrieben, eignet sich die dynamische Kommunikationstarifierung in digitalisierten Netzen nicht nur für Sprachverbindungen, sondern auch für jede andere Art einer elektronischen Kommunikation, wie zum Beispiel Video-, Daten- und Telefaxübertragung.

Außerdem sind Modifizierungen des Verfahrens bzw. des Systems dahingehend möglich, dass zum Beispiel durch Auslastungsmessung der Verbindungen nach Rufnummernplan und Querverbindungen die Entfernungsabhängigkeit völlig herausgenommen wird. Der Tarif ist dann ausschließlich nutzungsorientiert berechnet, das heißt bei starker Nutzung der gewählten Verbindung wird ein höherer Preis berechnet als bei schwach genutzten Verbindungen. Außerdem lässt sich durch die Verwendung eines Algorithmus zur Berechnung des aktuellen Tarifs mittels Setzen der Parameter - Gewichtungsfaktoren - Flexibilität in der Tarifgestaltung gewährleisten; es können dadurch zum Beispiel Minimal- und Maximaltarife eingestellt werden. Ebenso einfach können Parameter für Sondertarife in die Algorithmen eingearbeitet werden. Für die Ausgestaltung von Rabatten für Vieltelefonierer oder Großkunden ist eine äquivalente Realisierung hierdurch möglich. Der Minimaltarif sollte zum Beispiel die Selbstkosten decken und der Maximaltarif bei hoher Auslastung sollte den maximal vom Kunden akzeptierten Preis repräsentieren. Die Position des oberen möglichen Preises wäre durch internationalen Vergleich und Marktforschung zu ermitteln.

Die Tarife gelten immer für die gesamte Verbindungsdauer, das heißt also, dass für Verbindungen, die zu einem späteren Zeitpunkt begonnen würden, aufgrund höherer Netzauslastung ein höherer Tarif zugrunde gelegt würde, während für eine bestehende Verbindung dies nicht zum Tragen kommt. Diese Regel gilt im umgekehrten Fall sinngemäß. Außerdem lassen sich durch Programmänderung über den Algorithums Auslandsfaktoren für die unterschiedlichen Auslandsverbindungen in die Tarife sehr leicht einarbeiten. Durch das beschriebene Verfahren bzw. das beschriebene System ist somit eine völlige dynamische Kommunikationstarifierung in digitalen und auch in analogen Netzen möglich, wodurch eine Tarifierung aufgrund des jeweiligen tatsächlichen Auslastungsgrades der Netzstruktur realisiert wird.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen. Die Erfindung wird im folgenden anhand von in der Zeichnung dargestellten Ausführungsbeispielen näher beschrieben.

In der Beschreibung, in den Patenansprüchen, der Zusammenfassung und in der Zeichnung werden die in der hinten angeführten Liste der Bezugszeichen verwendeten Begriffe und die zugeordneten Bezugszeichen verwendet.

In der Zeichnung bedeuten:

Fig. 1    ein Prinzipschaltbild des erfindungsgemäßen Systems;

Fig. 2    eine Modifikation des Systems nach Fig. 1;

Fig. 3    Tarifgewichte am Beispiel einer Zentralvermittlungsstelle;

Fig. 4    eine Aufteilung eines Landes, zum Beispiel der Bundesrepublik Deutschland, in Kennzahl-Bereiche;

Fig. 5    eine Darstellung der Datenströme zwischen den Zentralvermittlungsstellen;

Fig. 6    Lastwerte/Tarifgewichte in der Ausprägung "Normalbetrieb"; und

Fig. 7    Lastwerte/Tarifgewichte in der Ausprägung "International Free Phone Service (IFS)".

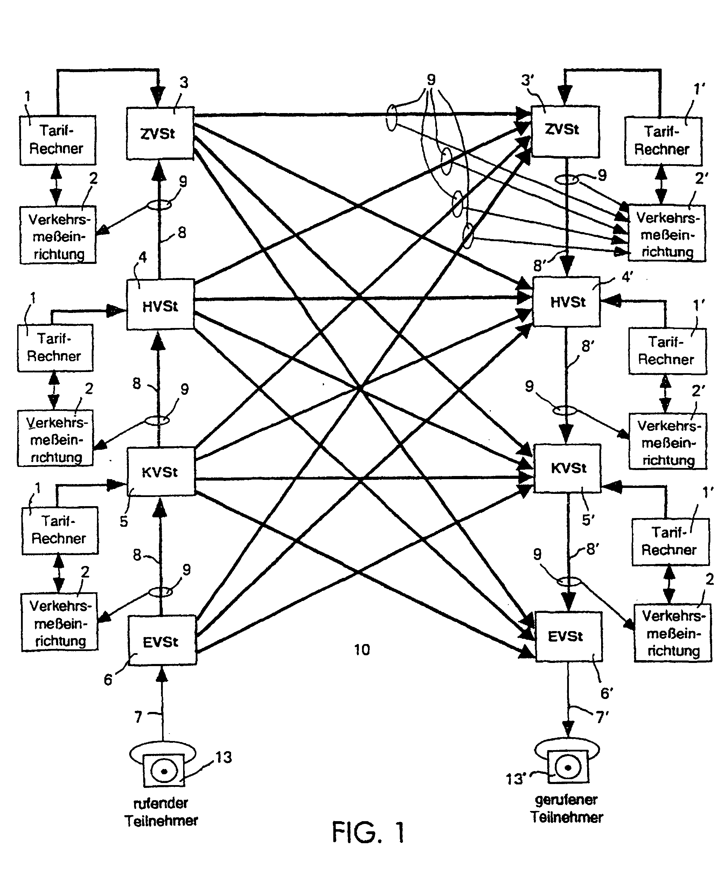

Das in Fig. 1 dargestellte Prinzipschaltbild der Systemstruktur zur Lasterfassung und Tarifgewichtung am Beispiel analoger Netzhierarchien zum Zwecke der dynamischen Kommunikationstarifierung zeigt sowohl auf der Seite des rufenden Teilnehmers als auch auf der Seite des gerufenen Teilnehmers eine hierarchische Netzstruktur. Sie besteht aus der Endvermittlungsstelle 6 bzw. 6', der Knotenvermittlungsstelle 5 bzw. 5', der Hauptvermittlungsstelle 4 bzw. 4' und der Zentralvermittlungsstelle 3 bzw. 3'. Jede der genannten Vermittlungsstellen ist mit einem Tarifrechner 1 bzw. 1' verbunden. An jedem Tarifrechner 1 bzw. 1' ist eine Verkehrsmesseinrichtung 2 bzw. 2' angeschlossen, die ihrerseits mit den Verbindungsleitungen 8 bzw. 8' zwischen den genannten Vermittlungsstellen gekoppelt ist. Außerdem ist der Tarifrechner 1' für die Zentralvermittlungsstelle 3' mit einer Verkehrsmesseinrichtung 2' verbunden, die beispielhaft für alle Verkehrsmesseinrichtungen 2' auf der gerufenen Seite mit allen Verbindungen zwischen der Endvermittlungsstelle 6, der Knotenvermittlungsstelie 5, der Hauptvermittlungsstelle 4 und der Zentralvermittlungsstelle 3 auf der Seite des rufenden Teilnehmers mit der Zentralvermittlungsstelle 3' auf der Seite des gerufenen Teilnehmers gekoppelt ist. Die Erfassung der Verkehrsströme - Lasterfassung - zu den Vermittlungsstellen unterhalb der Zentralvermittlungsstelle 3' verläuft sinngemäß. Außerdem besteht zwischen den sich entsprechenden Vermittlungsstellen oberhalb der Endvermittlungsstellen 6 bzw. 6' eine direkte Verbindung hin zum gerufenen Teilnehmer und eine Verbindung zu jeder der vorhandenen Vermittlungsstellen auf der Seite des rufenden Teilnehmers hin zu den vorhandenen Vermittlungsstellen, wie zum Beispiel der Knotenvermittlungsstelle 5', der Hauptvermittlungsstelle 4' und der Zentralvermittlungsstelle 3' auf der Seite des gerufenen Teilnehmers. Durch diese Systemstruktur bzw. -schaltung werden auf sämtlichen Verbindungen oberhalb der Teilnehmeranschlussleitung 7 bzw. 7' fortlaufend die Auslastungen der Leitungen gemessen. Die Messwerte werden in den Tarifrechnern 1 bzw. 1' gespeichert und stehen hier auf Abruf zur Verfügung. Der Grad der Auslastung ist ursächlich für den nach einem bestimmten Algorithmus zu ermittelnden aktuellen und auf die individuelle Verbindung bezogenen Tarif. Die Berechnungsalgorithmen zur Auslastungsgewichtung und zur Tarifermittlung sind ebenfalls in den Tarifrechnern 1 bzw. 1' gespeichert. Der aktuelle und individuelle Tarif wird auf dem Display des jeweiligen Telefonapparates bzw. Endgerätes des rufenden Teilnehmers bzw. des gerufenen Teilnehmers angezeigt, nachdem die Kennzahl des Zielortnetzes vollständig gewählt wurde. Unmittelbar nach Eingabe der letzten Ziffer der Ortsnetzkennzahl berechnet der Tarifrechner 1 bzw. 1' auf der Basis der letzten Verkehrsmessung zu diesem Ziel den augenblicklich gültigen Tarif und bringt ihn auf dem Display des Telefonapparates des rufenden Teilnehmers zur Anzeige. Wird nach Eingabe der Ortsnetzkennzahl nicht weiter gewählt, verhält das System eine gewisse Zeit, zum Beispiel fünf Sekunden, in diesem Angebotsstatus, um dem Kunden Zeit zur Entscheidung zu geben, das Gespräch zum angezeigten Tarif zu führen oder den Abbruch der Wahl, zum Beispiel durch Hörerauflegen, zu ermöglichen. Nach Ablauf der Bedenkzeit wird die bisherige Wahl vom System abgebrochen. In großen Ortsnetzen kann die geographische Lage des gerufenen Teilnehmers Einfluss auf die Tarifbildung haben. In diesem Fall fordert das System über das Display am Telefonapparat und akustisch zur Eingabe der nächsten drei Ziffern auf, um den aktuellen Tarif berechnen zu können. Dies ist nur in der Funktion "Tarifauskunft" von Bedeutung.

Wählt der Teilnehmer die Nummer seines Gesprächspartners, wird der angezeigte Tarif der Berechnung der Kommunikationskosten für diese Verbindung zugrunde gelegt. Die tatsächlichen Verbindungskosten werden nach Ende der Verbindung beim rufenden Teilnehmer am Endgerät angezeigt. Abhängig von den verfügbaren Leistungsmerkmalen im rufenden Endgerät könnten auch die laufenden kumulierenden Gesprächskosten während des Gespräches angezeigt werden.

Die dynamische Kommunikationstarifierung lässt sich auch auf große Ortsnetze anwenden. Alle Ortsgespräche in andere Vermittlungsstellenbereiche lassen sich grundsätzlich dynamisch tarifieren. Sobald der rufende Teilnehmer die Kennzahl der gerufenen Vermittlungsstelle gewählt hat, wird - analog zur Fernverbindung - der momentan gültige Tarif vom Tarifrechner 1 an das rufende Endgerät übermittelt und dort angezeigt. Die Fortsetzung der Wahl bewirkt auch hier die Berechnung des Verbindungsentgelts auf der Basis des angezeigten dynamischen Tarifs, Tarifabfragen werden analog wie oben beschrieben behandelt.

Da im digitalen Netz unabhängig von der Kommunikationsart ausschließlich Impulse übertragen werden, eignet sich die dynamische Kommunikationstarifierung nicht nur zur Tarifierung von Sprachverbindungen, sondern auch für jede andere Art von elektronischer Kommunikation im Multimediabereich, bei der Datenübertragung, bei der Videoübertragung usw. Durch Auslastungsmessungen der Verbindungen nach Rufnummernplan und Querverbindungen könnte alternativ auch die Entfernungsabhängigkeit völlig herausgenommen werden. Der Tarif würde sich dann ausschließlich nutzungsorientiert ergeben, das heißt bei starker Nutzung der gewählten Verbindung wird ein höherer Preis berechnet als bei schwach genutzten Verbindungen. Durch Verwendung eines Algorithmus zur Berechnung des aktuellen Tarifs ist über die Setzung der Parameter in den Tarifrechnern 1 bzw. 1' - Gewichtungsfaktoren - eine hohe Flexibilität in der Tarifgestaltung gewährleistet. Hierüber lassen sich dann auch zum Beispiel Minimal- und Maximaltarife einstellen. Ebenso sind Parameter für Sondertarife in die Algorithmen einzubringen wie dies zum Beispiel für die Ausgestaltung von Rabatten für Vieltelefonierer oder Großkunden benötigt wird. Der Minimaltarif sollte dabei die minimalen Selbstkosten decken und der Maximaltarif - bei hoher Auslastung des Netzes - sollte den maximal vom Kunden akzeptierten Preis repräsentieren. Die Position der oberen möglichen Preise ist zum Beispiel durch internationalen Vergleich und Marktforschung zu ermitteln. Tarife gelten immer für die gesamte Verbindungsdauer. Sollte also für Verbindungen, die zu einem späteren Zeitpunkt begonnen würden, aufgrund von höherer Netzauslastung ein höherer Tarif zugrunde zu legen sein, so gilt dies nicht für die bestehende Verbindung. Diese Regel gilt im umgekehrten Fall auch sinngemäß und ist aus Gründen der Tarifsicherheit für die Kunden unumgänglich. Über den Algorithmus lassen sich auch noch sogenannte Auslandsfaktoren für die unterschiedlichen Auslandsverbindungen in die Tarife mit einarbeiten. Bei weltweiter Einführung könnte auch hier auf feste Sondertarife verzichtet werden. Die unterschiedlichen Netzbetreiber erhalten dann ihre Entgelte überall und ausschließlich nur vom rufenden Teilnehmer. Eventuell zusätzlich vereinbarte Ausgleichszahlungen zwischen den einzelnen Netzbetreibern bleiben davon unberührt.

Die Tarifabfrage, also das Anwählen des Ortsnetzes ohne Wahl der Teilnehmernummer nur zum Zwecke der Tarifauskunft, ist Serviceleistung und könnte zum Beispiel mit einem Festbetrag berechnet werden, der mit dem Gespräch, wenn es geführt wird, verrechnet wird. Sollte das Gespräch nicht geführt werden, wird die Tarifabfrage zum Beispiel als Posten in der Rechnung erscheinen.

Die dynamische Kommunikationstarifierung lässt sich auch auf dem von der UIT genormten "International Free Phone Service (IFS)" anwenden. Hier sind die ermittelten Tarifgewichte nicht zum rufenden, sondern zum gerufenen Teilnehmer zu übermitteln. Die Übermittlung dieser Daten kann mit einer leicht modifizierten Signalisierung durchgeführt werden. Die Tarifinformation wird hierbei beim gerufenen Teilnehmer auf einem von der dynamischen Kommunikationstarifierung aktivierten Display angezeigt. Der per "International Free Phone Service" um Kostenübernahme gebetene Teilnehmer hat - zusammen mit der angezeigten Rufnummer des rufenden Teilnehmers - die Entscheidungsfreiheit darüber, ob er das Gespräch annehmen will oder nicht.

Damit ist gezeigt worden, dass die dynamische Kommunikationstarifierung sowohl in analogen Netzen als auch in digitalen Netzen ohne weiteres möglich ist, und dass die bereits bestehenden verschiedenen Dienste der Netzbetreiber ohne weiteres mit einer solchen dynamischen Kommunikationstarifierung versehen werden können, ohne dass Einschränkungen in diesen Diensten hingenommen werden müssen.

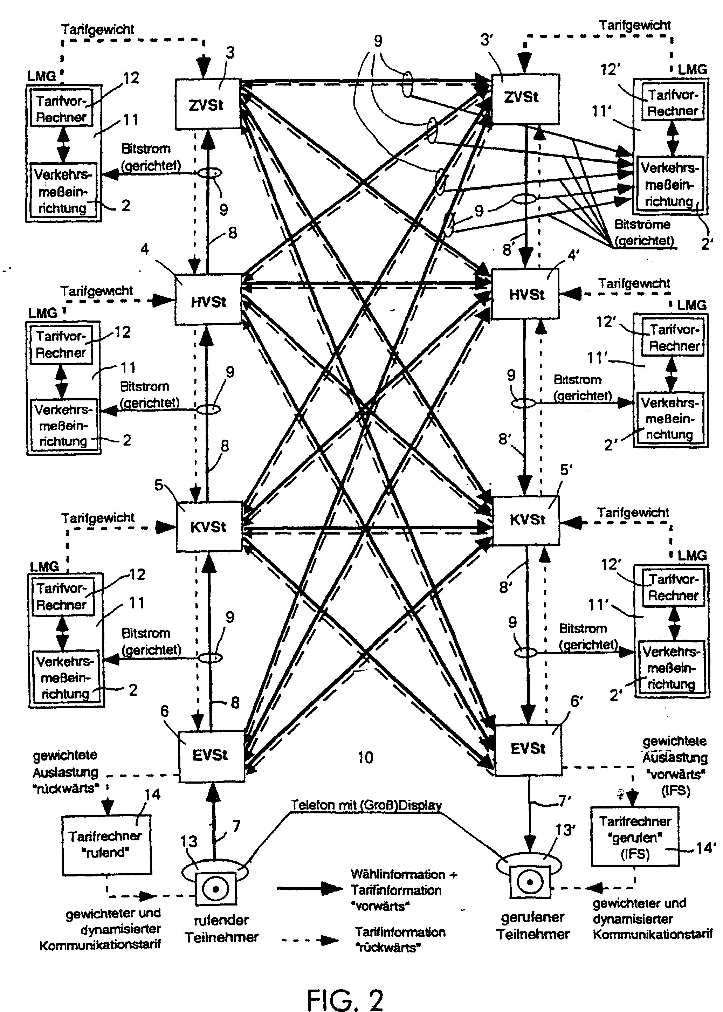

Die in Fig. 2 dargestellte Systemstruktur enthält alle Möglichkeiten des Verbindungsaufbaus eines nationalen Ferngesprächs nach Fig. 1. Zusätzlich sind Querwege zwischen den Endvermittlungsstellen 6 bzw. 6' und den höheren Ebenen der analogen Netzhierarchie eingezeichnet, die im analogen Netz nicht vorkommen, die aber in digitalen Netzen technisch ohne weiteres realisierbar sind. Die wesentlichen Baugruppen der dynamischen Kommunikatonstarifierung nach Fig. 2 sind die Verkehrsmesseinrichtungen 2 bzw. 2' in Verbindung mit den Tarifrechnern 1 bzw. 1', die gemeinsam die Lastmessgruppen 11 bzw. 11' bilden. Eine Lastmessgruppe 11 bzw. 11' besteht aus einer Verkehrsmesseinrichtung 2 bzw. 2' und einem Tarif-Vorrechner 12 bzw. 12'. In den Vermittlungsstellen befinden sich Tarifverknüpfungsrechner mit deren Hilfe die Tarifgewichte der Querwege mit denen des Hauptweges - Kennzahlenweg - nach bestimmten, vom Netzbetreiber zu definierenden Parametern zu verknüpfen und als neue Tarifgewichte der nächsthöheren Stufe weiterzureichen sind; dies ist in Fig. 2 dargestellt. Die eigentlichen Tarifrechner 14 bzw. 14' sind gemäß Fig. 2 mit den Endgeräten, das heißt mit den Endpunkten der Verbindungen in den Endvermittlungsstellen 6 bzw. 6' verbunden.

Diese Baugruppen können sowohl als eigenständige Geräte als auch als Komponenten, zum Beispiel als Einschubkarten realisiert sein. Abhängig von der Struktur des digitalen Vermittlungssystem können die drei Komponenten der dynamischen Kommunikationstarifierung ganz oder teilweise auch als Software in Form von bestimmten Programmen bzw. Programmteilen ausgeführt sein und in das Programmsystem der Vermittlungsstelle integriert werden. Zur Fig. 2 soll noch hinzugefügt werden, dass die unten dargestellten Telefonapparate auch andere Endgeräte, wie zum Beispiel Telefaxgeräte, Personalcomputer oder andere Multimediageräte sein können. Die durchgezogenen Linien mit den Pfeilspitzen sollen die Wählinformation plus die Tarifinformation in Vorwärtsrichtung darstellen und die gestrichelten Linien mit der Pfeilspitze sollen die Tarifinformation in der Rückwärtsrichtung darstellen. Der zwischen der Endvermittlungsstelle 6 des Endgerätes 13 des rufenden Teilnehmers liegende Tarifrechner bekommt über die gestrichelte Leitung von der Endvermittlungsstelle 6 die gewichtete Auslastung "rückwärts" und gibt den gerichteten und dynamisierten Kommunikationstarif über die ausgangsseitige gestrichelte Linie an das jeweilige Endgerät 13 zunächst zur Anzeige ab. Auf der Seite des gerufenen Teilnehmers 13' bekommt der entsprechende "gerufene" Tarifrechner von der Endvermittlungsstelle 6' die gewichtete Auslastung "vorwärts" über die gestrichelt dargestellte Leitung und gibt über die ausgangsseitig gezeigte gestrichelte Linie den gewichteten und dynamisierten Kommunikationstarif an den gerufenen Teilnehmer 13', zunächst zur Anzeige, ab.

Die zentrale Aufgabe der Lastmessgruppen 11 ist die automatische Messung in bestimmten vorgegebenen Intervallen des Verkehrsflusses auf der Messstrecke und damit der Auslastung der überwachten Verbindungen bzw. Leitungs- oder Verbindungsbündel. Die Gewichte der Messwerte mit dem zu dieser Messstrecke gehörenden Gewichtungsfaktor wird im jeweiligen Tarifvorrechner durchgeführt. Er erhält dazu über eine Kopplung von der jeweiligen Messstrecke einen gerichteten Bitstrom. Die Lastmessgruppe 11 gibt an die zugehörige Vermittlungsstelle das errechnete Tarifgewicht über die gestrichelt gezeichneten Leitungen ab. Die Basis der Tarifgewichtung ist ein nach den Bedürfnissen des jeweiligen Netzbetreibers zu definierender Tarif-Algorithmus, der die gemessene Auslastung der Verbindung bzw. Teilverbindung mit entsprechenden Faktoren gewichtet und dadurch eine gegen Unendlich gehende Flexibilität in der Tarifgestaltung ermöglicht, wie noch später detaillierter erklärt wird. Der gewichtete Auslastungswert, nämlich das Tarifgewicht TG wird im Rahmen der Signalisierung an die nächst niedrigere Hierarchiestufe in Richtung zum rufenden Teilnehmer 13 übertragen. Im Tarifrechner 14 der Endvermittlungsstelle 6 wird dieser Wert mittels eines Tarifalgorithmus in den jeweiligen augenblicklich gültigen Kommunikationstarif umgewandelt und im rufenden Endgerät 13 zur Anzeige gebracht.

Durch Ankopplung der Lastmessgruppe 11 in den oberen Hierarchiestufen des Systems zum Zwecke des Datenaustausches lässt sich ein regional gültiger mittlerer Auslastungswert ermitteln und gewichten, der dann als Grundwert in den Algorithmus zur Berechnung des dynamischen Kommunikationstarifes übernommen werden kann.

In gleicher Weise lässt sich durch Kopplung der Lastmessgruppen in der Fernebene eine durchschnittliche Grundlast einer bestimmten Fernregion ermitteln, die dann wiederum mit entsprechender Gewichtung als Basis für regionale Ebenen herangezogen werden kann.

Nach diesem Prinzip lassen sich auch internationale Verbindungen in die dynamische Kommunikationstarifierung integrieren. Internationale Normung vorausgesetzt, lässt sich dieses System als weltweit einheitliches dynamisches Tarifierungssystem verwenden. Dem Prinzip folgend, dass grundsätzlich der rufende Teilnehmer 13 Rechnungsempfänger ist und der grenzüberschreitende Verkehr in beiden Richtungen in erster Näherung etwa gleiche Verkehrsströme erzeugt, ergibt sich hierdurch die Möglichkeit, auf die Tarifierung verkomplizierende Ausgleichszahlungen vollständig zu verzichten.

Wird mit dem Aufbau der Verbindung kontinuierlich die zugehörige Auslastung, nämlich das Tarifgewicht der Teilstrecken bestimmt, und in Form von Verknüpfungstarifgewichten, zum Beispiel mit der Signalisierung an die jeweils nächste Stufe der Verbindung weitergereicht, so ergibt sich der "Vorwärtsaufbau" der Tarifinformation. Der Vorwärtsaufbau wird dann - mit einer bestimmten IFS-Kennung - International Free Phone Service - versehen, vom gerufenen Endgerät 13' erkannt und dort zur Anzeige gebracht, sobald die Verbindung aufgebaut ist und zwar noch bevor der gerufene Teilnehmer den Hörer abnimmt. Der gerufene Teilnehmer kann in einer Variante auch über optische und/oder akustische Signale darauf aufmerksam gemacht werden, dass das ankommende Gespräch von ihm zu bezahlen ist, wenn er es annimmt.

Im nachfolgenden soll nun noch einmal detailliert auf verschiedene Methoden zur Messung der Verbindungsauslastung eingegangen werden:

a) der ankommende Verkehr wird in den Ziel-Vermittlungsstellen nach Richtung und Dauer von speziellen, mit Messsensoren ausgestatteten, Rechnern - oder Programmen in der Vermittlungssoftware - erfasst und in Auslastungswerte umgerechnet. Im Rahmen der Signalisierung übermittelt die Ziel-Vermittlungsstelle ihre Auslastungswerte an die rufende Vermittlungsstelle. Diese Methode nutzt den letzten "Vergangenheitswert" der Auslastungsmessung zur Beurteilung der aktuellen Situation. Damit kommt dem Messintervall entscheidende Bedeutung für die Zuverlässigkeit des Verfahren zu. Es sollte hinreichend sein, Auslastungsmessungen in Intervallen im Minutenbereich durchzuführen; andere Intervalle können je nach Bedarf verwendet werden.

b) Jede "Hauptverkehrsstrecke" meldet ihre Auslastung an die vorhergehende Vermittlungsstelle. Hier wird mit einem zu definierenden Gewichtungsfaktor das entgeltenrelevante Tarifgewicht TG ermittelt (zum Beispiel Hamburg --> München zu 90% ausgelastet, Gewichtungsfaktor = 10 in einer Skala von 1 bis 10; Tarifgewicht in diesem Beispiel also 90 in einer Skala von 1 bis 100).

c) Es werden die in der Vergangenheit aufgetreten "Gruppenbesetzt" gezählt und in Auslastungs-Grenzwerte umgesetzt. Hiermit lassen sich die Hauptverkehrszeiten über einen "Besetztfaktor" bestimmen.

d) Die Stromaufnahme eines Vermittlungsrechners wird als Maß seiner Auslastung herangezogen. Bezugsgröße in diesem Fall ist dessen Stromaufnahme im Ruhezustand. Mit steigender Rechenaktivität nimmt auch die Stromaufnahme zu.

e) Anstelle der Stromaufnahme des Vermittlungsrechners kann auch die Summe der einzelnen Stromaufnahmen der Mikroprozessoren in den Vermittlungsrechnern herangezogen werden.

f) Die Auslastung wird richtungsbezogen aus den aufgezeichneten und analysierten Signalisierungsdaten - zum Beispiel im SS#7 - ermittelt und in Auslastungswerte umgerechnet. Als Ergebnis ergeben sich zum Beispiel Auslastungswerte in "Gespräche pro Zeiteinheit", die auf die Gesamtkapazität der in der betrachteten Richtung möglichen Gespräche bezogen sind.

g) Es werden bereits auch verschiedene Verfahren zur Analyse der Datenströme auf den Übertragungskanälen angeboten. Hewlett Packard zum Beispiel hat ein System entwickelt, mit dem das Telefonierverhalten der Teilnehmer gezielt messtechnisch analysiert werden kann. Das System ist unter der Bezeichnung "Call Behavior Analysis (CBA)" bekannt.

Die Firma Trend Communications aus Kalifornien (USA), ein Spezialist für Mess- und Prüfgeräte für Telekommunikationsprobleme, bietet einen Network Call Simulator (NCS) an, mit dem hochbitratiger Digitalverkehr simuliert werden kann. Mit NCS werden Netze unter Extrembedingungen geprüft und dabei bis an die Auslastungsgrenze belastet.

Mit dem ATM Load Test Generator bietet Trend ein System zum Testen von ATM-Netzen mit extrem hohen Verkehrsraten.

Die Tarifalgorithmen sind das Instrument zur Tarifierung. In ihnen sind alle als relevant erkannten Einflussgrößen über Rechenoperationen miteinander verbunden.

Beispiel:

Der gewichtete Tarif $T_k$ für eine Kommunikationsverbindung errechnet sich nach

$$T_k = k \cdot \text{Auslastung} \cdot \text{Grundpreis}$$

mit

k =    Gewichtungsfaktor, zum Beispiel
k =    (Streckenbewertung · Sprechverhalten)/Kundenfaktor...)

Hieraus ergibt sich der Preis P für eine Kommunikationssitzung zu

$$P = T_k \cdot t$$

mit t = Zeitdauer der Verbindung.

Damit errechnet sich der Preis der Kommunikationssitzung nach

$$P = t \cdot \frac{\text{Streckenbewertung} \cdot \text{Sprechverhalten} \cdot \text{Auslastung} \cdot \text{Grundpreis}}{\text{Kundenfaktor}}$$

Mit "Streckenbewertung" lassen sich stark frequentierte Strecken besonders gewichten. Grundsätzlich ist eine solche Gewichtung jedoch nicht zwingend notwendig.

Der Faktor "Sprechverhalten" soll den Einfluss von vielen Kurzzeitgesprächen - Geschäftsverkehr - bzw. von wenigen Langzeitbelegungen - Internet-Surfen - oder "soziale" Kommunikation - ältere Bürger, Schüler - im Ortsnetz berücksichtigen.

Mit "Kundenfaktor" wird die Art des Kunden beschrieben: sporadischer Telefonierer, Vielsprecher, internationaler Telefonierer, Netz-Surfer .... Hiermit lassen sich sowohl Großabnehmerrabatte als auch Mindermengenzuschläge definieren.

Bei einer Spannbreite von 1 bis 10 der Gewichtungsfaktoren wird k Werte zwischen 1 und 100 annehmen.

Dieses Beispiel ist weder allumfassend noch abschließend. Es dient lediglich dem Verständnis der Möglichkeiten und der in einem solchen System vorhandenen großen Flexibilität. Falls notwendig, lassen sich weitere Gewichtungsfaktoren definieren, die in den Algorithmus integriert werden können. Selbstverständlich ist dieser insgesamt dann wieder auf das zu erreichende Ziel hin neu anzupassen.

Die "Angebots"-Stellung des Systems ist durch Erweiterung der Vermittlungssoftware zu realisieren. Bei "normaler" Wahl, also ohne Verzögerung zwischen den einzelnen Wahlstufen, funktioniert das System in gewohnter Weise. Die Eingabe weiterer Ziffern dominiert also die Wartezeit der Angebots-Stellung. Erst bei Ausbleiben einer weiteren erwarteten Ziffer geht das System in den Wartezyklus. Die Länge dieses Zyklus sollte etwa 10 bis maximal 15 Sekunden betragen.

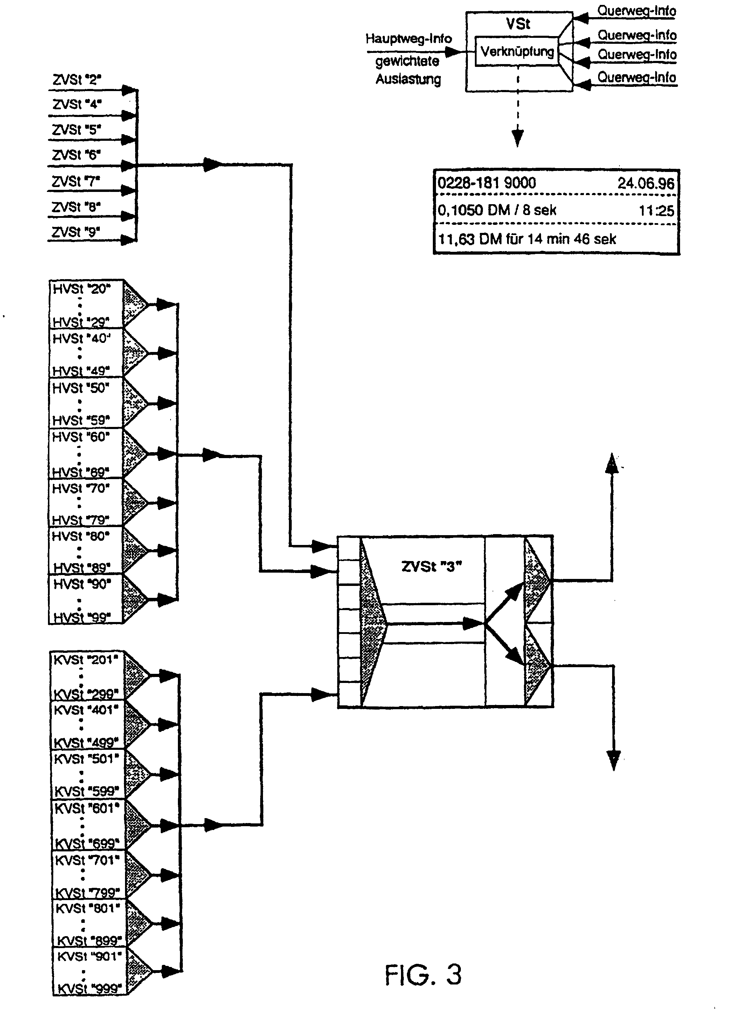

In Fig. 3 ist die Ermittlung der Tarifgewichte am Beispiel einer Zentralvermittlungsstelle dargestellt. Die Zentralvermittlungsstelle 3 ist mit den Zentralvermittlungsstellen 2, 4 bis 9, Hauptvermittlungsstellen 20 bis 29, 40 bis 99 und Knotenvermittlungsstellen 201 bis 299 und 401 bis 999 verbunden. An dem einen Ausgang stellt die Zentralvermittlungsstelle 3 das Zentralvermittlungsstellengewicht in Richtung zum rufenden Teilnehmer im Normalbetrieb bereit und am anderen Ausgang das Zentralvermittlungsstellengewicht in Richtung zum gerufenen Teilnehmer im "International Free Phone Service" (IFS). In Fig. 3 ist ein Tarifrechner von Vermittlungsstellen grundsätzlich dargestellt, der über die Hauptweginformationen die gewichtete Auslastung bekommt und zum anderen die Querweginformationen. Diese werden in dem Tarifrechner zur Tarifinformation miteinander verknüpft, die zur Anzeige am Endgerät bzw. am Telefon des Teilnehmers ausgegeben wird. Ein Beispiel für eine mögliche Anzeige in einem Telefon-Display ist in dem stark umrandeten Kästchen gezeigt.

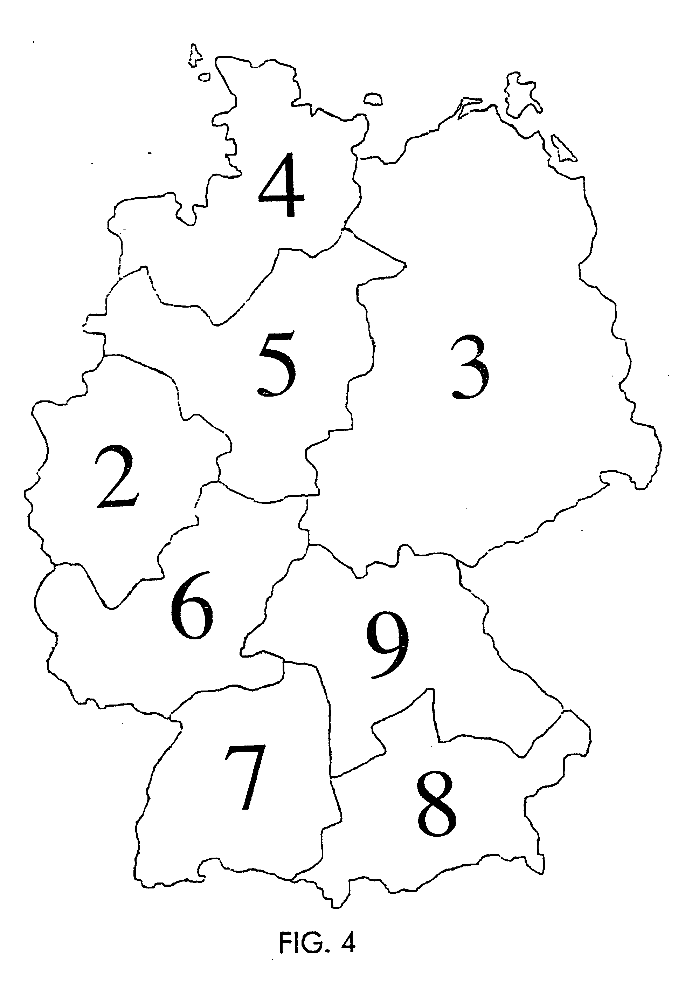

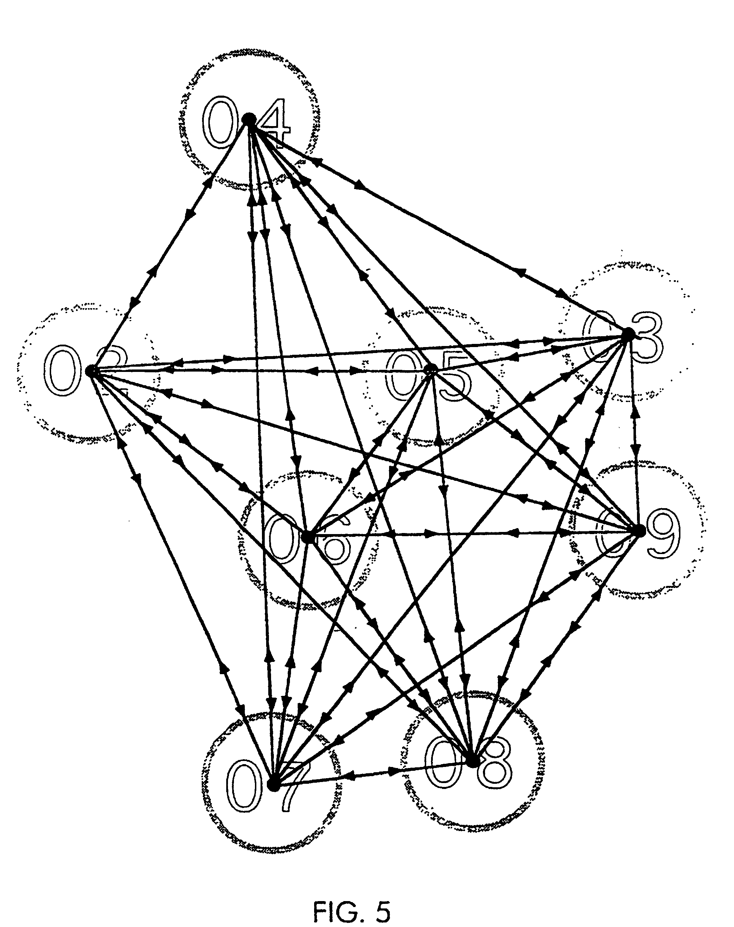

Die Fig. 4 zeigt eine Aufteilung eines Territoriums in Kennzahlbereiche. Zwischen diesen Kennzahlbereichen bestehen Datenströme in den zugeordneten Zentralvermittlungsstellen wie in Fig. 5 beispielhaft dargestellt.

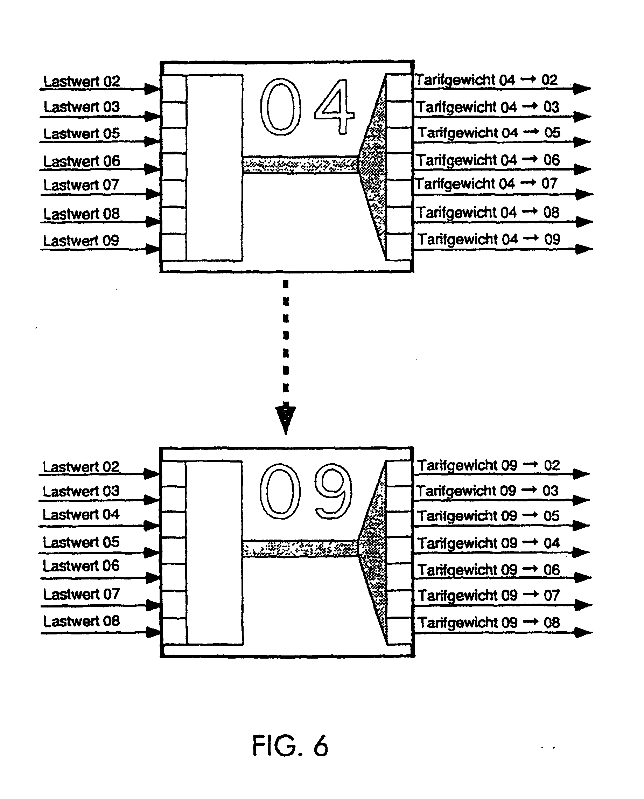

In Fig. 6 sind die zur dynamischen Kommunikationstarifierung erforderlichen Lastwerte bzw. Tarifgewichte im Normalbetrieb zwischen den Zentralvermittlungsstellen in den Bereichen 04, 09 dargestellt. Auf der Eingangsseite sind jeweils die gemessenen Lastwerte zu sehen und auf der Ausgangsseite die berechneten Tarifgewichte.

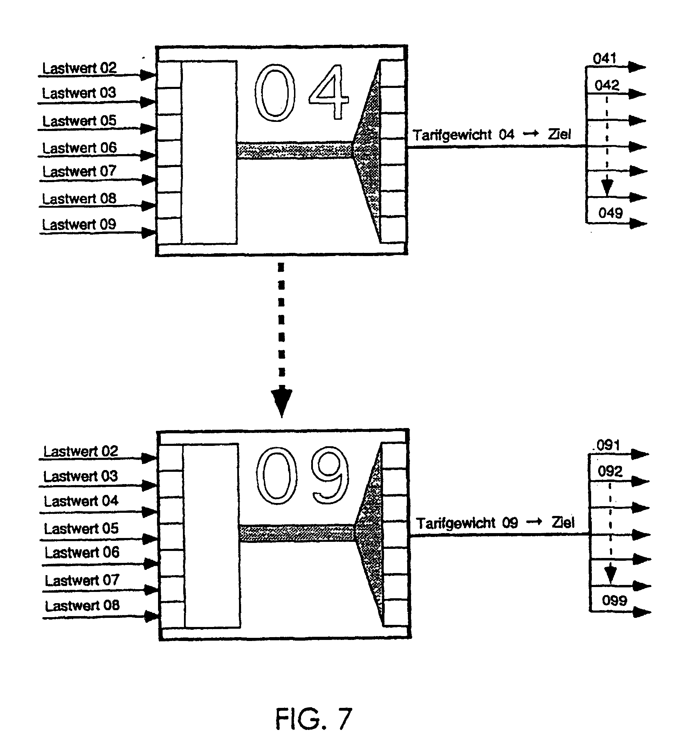

In Fig. 7 sind die Lastwerte/Tarifgewichte für die dynamische Kommunikationstarifierung im International Free Phone Service (IFS) gezeigt. Auch hier werden wieder die gemessenen Werte eingegeben und die Rechner der Vermittlungsstellen berechnen daraus die zugeordneten Tarifgewichte, wobei die Zielrichtung zum Beispiel aus der Signalisierungsinformation erkannt bzw. abgeleitet wird.

**Bezugszeichenliste**

| | |
|---|---|
| 1 + 1' | Tarifrechner |
| 2 + 2' | Verkehrsmesseinrichtung (-schaltung) |
| 3 + 3' | Zentral-Vermittlungsstelle |
| 4 + 4' | Haupt-Vermittlungsstelle |
| 5 + 5' | Knoten-Vermittlungsstelle |
| 6 + 6' | End-Vermittlungsstelle |
| 7 + 7' | Leitung oder Verbindung |
| 8 + 8' | Leitung bzw. Leitungsbündel |
| 9 | Koppeleinrichtung |
| 10 | Querverbindungen |
| 11 + 11' | Lastmessgruppe |
| 12 + 12' | Tarifvorrechner |
| 13 + 13' | rufender bzw. gerufener Teilnehmer bzw. Endgerät |
| 14 + 14' | Tarifrechner "rufend bzw. gerufen" |
| EVSt | Endermittlungsstelle |
| KVSt | Knotenvermittlungsstelle |
| HVSt | Hauptvermittlungsstelle |
| ZVSt | Zentralvermittlungsstelle |
| LMG | Lastmessgruppe |
| IFS | International Freephone Service |
| TG | Tarifgewicht |

**Patentansprüche**

1. Verfahren zur Kommunikationstarifierung in digitalisierten oder analogen Kommunikationsnetzen, die drahtgebunden, funkoder lasergestützt, terrestrisch oder über Satelliten realisiert sind, mit Endgeräten (13) eines rufenden und eines gerufenen Teilnehmers, wobei in dem Kommunikationsnetz die Auslastung von Verbindungsleitungen bzw. -bündeln oberhalb einer Anschlussleitung eines Teilnehmers kontinuierlich gemessen wird und die sich daraus ergebenden aktuellen Messwerte in speziellen, mit Rechnungsalgorithmen in Form von Programmen ausgerüsteten Tarifrechnern (1) gespeichert werden und auf Abruf zur Verfügung stehen und im Bedarfsfall von den Tarifrechnern in aktuelle, auf die individuelle Verbindung bezogene Tarife umgerechnet werden, **dadurch gekennzeichnet,**
   **dass** zu jeder Zeit auf allen Verbindungen die aktuelle Auslastung gemessen wird,
   **dass** in den Tarifrechnern (1) Rechnungsalgorithmen in Form von Programmen gespeichert sind, die den Grad der Auslastung für den zu ermittelnden aktuellen und auf eine individuelle Verbindung bezogenen Kommunikationstarif berücksichtigen, wobei die bisher übliche Entfernungsabhängigkeit durch die Auslastungsmessung auf allen Teilstücken einer Verbindung - Kennzahlenweg und Querverbindungen - ersetzt wird,
   **dass** der aktuelle und individuelle Kommunikationstarif am Endgerät (13) des rufenden Teilnehmers angezeigt wird, nachdem eine Kennzahl eines Zielortsnetzes - Ortsnetzkennzahl - vollständig gewählt ist,
   **dass** unmittelbar nach Eingabe der letzten Ziffer der Kennzahl des Zielortsnetzes der Tarifrechner (1) den auf der Basis der letzten Verkehrsmessung zu diesem Ziel berechneten und augenblicklich gültigen Tarif zur Anzeige am Endgerät (13) des rufenden Teilnehmers überträgt,
   **dass** bei Ausbleiben der Weiterwahl nach Eingabe der Kennzahl des Zielortsnetzes ein Angebotsstatus über eine bestimmte Zeit aufrechterhalten wird, währenddessen entweder ein Abbruch des Wahlvorgangs oder das Weiterwählen bei positivem Entscheid erfolgt und
   **dass** die tatsächlichen Verbindungskosten am Endgerät (13) des rufenden und/oder des gerufenen Teilnehmers optisch und/oder akustisch angezeigt werden.

2. Verfahren nach Patentanspruch 1, **dadurch gekennzeichnet,**
   **dass** die Berechnung des aktuellen Kommunikationstarifs mittels Verwendung eines Algorithmus über Setzen von Parametern - Gewichtungsfaktoren - erreicht wird und
   **dass** durch Änderung der Parameter Minimal- und Maximaltarife, Sondertarife und Rabatte für Vieltelefonierer und Großkunden integriert werden.

3. Verfahren nach Patentansprüche 1 oder 2, **dadurch gekennzeichnet,**
   **dass** von Lastmessgruppen (12, 12') berechnete Tarifgewichte zu den zugehörigen Vermittlungsstellen gegeben werden und
   **dass** in den Vermittlungsstellen Tarifverknüpfungsrechner die Tarifgewichte der Verbindungsteilstücke - Querwege und Hauptwege - nach bestimmten, vom Netzbetreiber zu definierenden Parametern verknüpfen und als neue Tarifgewichte an die nächst-höhere Stufe weiterleiten.

4. Verfahren nach einem der vorangehenden Patentansprüche, **dadurch gekennzeichnet,**
   **dass** die Höhe der Stromaufnahme eines Vermittlungsrechners bzw. entsprechender Mikroprozessoren im Verhältnis zur Höhe des Stromes im Ruhezustand für Messgrößen der Auslastung benutzt werden und dass die Auslastung richtungsbezogen aus gespeicherten und analysierten Signalisierungsdaten ermittelt und in Auslastungswerte umgerechnet wird.

5. System zur Durchführung des Verfahrens nach einem der vorangehenden Patentansprüche, **dadurch gekennzeichnet,**
   **dass** mit den Verbindungsleitungen bzw. -bündeln (8, 8') zwischen einzelnen Vermittlungsstellen (3 bis 6 bzw. 3' bis 6') Verkehrsmesseinrichtungen (2, 2') gekoppelt sind, die jeweils mit einem Tarifrechner (1, 1') verbunden sind, der für die Weitergabe der Ausgangswerte mit der in der Hierarchie der Vermittlungsstellen jeweils höheren Vermittlungsstelle verbunden ist,
   **dass** die mit den Tarifrechnern (1, 1') der Stufen des abfallenden Kennzahlenweges verbundenen Verkehrsmesseinrichtungen (2') über Koppeleinrichtungen (9) mit allen Querverbindungen (10) verbunden sind, und
   **dass** jeder Vermittlungsstelle oberhalb der End-Vermittlungsstelle eine Lastmessgruppe zugeordnet ist, die aus einem Tarifvorrechner (12) und einer Verkehrsmesseinrichtung (2) besteht.

6. System nach Patentanspruch 5, **dadurch gekennzeichnet,**
   **dass** zwischen dem Endgerät (13) des rufenden Teilnehmers und der zugeordneten End-Vermittlungsstelle (6) ein Tarifrechner (14) angeordnet ist, und
**dass** auf der Seite des gerufenen Teilnehmers ebenfalls ein Tarifrechner (14') zwischen der End-Vermittlungsstelle (6') und dem Endgerät (13') angeordnet ist.

**7.** System nach Patentanspruch 5 oder 6, **dadurch gekennzeichnet,**
**dass** eine Wählinformation und eine Tarifinformation zum Endgerät (13') des gerufenen Teilnehmers hin über wählbare Leitungen, auch Funkkanäle, verbunden sind, und
**dass** die Tarifinformation rückwärts zum Endgerät (13) des rufenden Teilnehmers verbunden ist.

**8.** System nach einem der Patentansprüche 5 bis 7, **dadurch gekennzeichnet, dass** die Bitströme zu den Verkehrsmesseinrichtungen (2, 2') gerichtet sind, und
dass die Koppeleinrichtung (9) kapazitiv, induktiv, galvanisch oder mit entsprechenden integrierten Schaltungen realisiert ist.

**Claims**

**1.** Process for communication tariffing in digitized or analogue communication networks realized by wire-bound, radio- or laser-based or terrestrial means or via satellite, with terminals (13) of a calling and of a called subscriber, wherein, in the communication network, the capacity loading of inter-exchange trunks or trunk groups above a subscriber line of a subscriber is continuously measured and the therefrom resulting instantaneous measured values are stored in special tariff computers (1) equipped with calculation algorithms in the form of programs and are retrievable and, if required, are converted by the tariff computers into instantaneous tariffs referring to the individual call, **characterized in that**
the instantaneous capacity loading is measured at all times on all calls;
stored in the tariff computers (1) are calculation algorithms in the form of programs which take into consideration the degree of capacity loading for the to-be-calculated instantaneous communication tariff referring to an individual call, the hitherto customary dependence on distance being replaced by the measurement of capacity loading on all part-sections of a call - code path and tie-line connections;
the instantaneous and individual communication tariff is indicated on the terminal device (13) of the calling subscriber after a code of a destination local network - local network code - has been completely dialled;
immediately after the last digit of the code of the destination local network has been entered, the tariff computer (1) transmits the instantaneously valid tariff, calculated on the basis of the last traffic measurement for that destination, for indication on the terminal device (13) of the calling subscriber;
if there is no further dialling after the code of the destination local network has been entered, an offer status is maintained for a certain time during which either dialling is aborted or, in the case of a positive decision, dialling is continued; and
the actual call charges are indicated visually and/or audibly on the terminal device (13) of the calling and/or called subscriber.

**2.** Process according to claim 1, **characterized in that**
the instantaneous communication tariff is calculated by using an algorithm via the setting of parameters - weighting factors - and
minimum and maximum tariffs, special tariffs and discounts for frequent callers and volume customers are integrated by changing the parameters.

**3.** Process according to claim I or 2, **characterized in that**
tariff weightings calculated by load-measuring groups (12, 12') are given to the associated exchanges and
in the exchanges, tariff logic computers compute the tariff weightings of the part-sections of the call - tie paths and main paths - according to certain parameters to be defined by the network operator and transmit the said tariff weightings as new tariff weightings to the next-higher level.

**4.** Process according to any one of the preceding claims, **characterized in that**
the magnitude of the current consumption of a switching processor or corresponding microprocessors in relation to the magnitude of the current at idle is used for measured quantities of the load capacity and
the load capacity is calculated directionally from stored and analyzed signalling data and is converted into load capacity values.

5. System for implementing the process according to any one of the preceding claims, **characterized in that** coupled to the inter-exchange trunks or trunk groups (8, 8') between individual exchanges (3 to 6 and 3' to 6') are traffic-measuring means (2, 2') which are each connected to a tariff computer (1, 1'), said tariff computers each being connected - for transmission of the output values - to the next-higher exchange in the hierarchy of exchanges; the traffic-measuring means (2') connected to the tariff computers (1, 1') of the levels of the falling code path are connected to all tie lines (10) via switching means (9); and
each exchange above the end exchange is associated with a load-measuring group consisting of a tariff preprocessor (12) and a traffic-measuring means (2).

6. System according to claim 5, **characterized in that**
a tariff computer (14) is disposed between the terminal device (13) of the calling subscriber and the associated end exchange (6); and
at the called subscriber end, there is likewise a tariff computer (14') disposed between the end exchange (6') and the terminal device (13').

7. System according to claim 5 or 6, **characterized in that**
dialling information and tariff information are connected to the terminal device (13') of the called subscriber via selectable lines, including radio channels, and
the tariff information is connected backwards to the terminal device (13) of the calling subscriber.

8. System according to any one of claims 5 to 7, **characterized in that** the bit streams are directed to the traffic-measuring means (2, 2'); and
the switching means (9) is realized by capacitive, inductive or galvanic means or with corresponding integrated circuits.

**Revendications**

1. Procédé de tarification des communications dans des réseaux numérisés ou analogiques de transmission par voie câblée, hertzienne, par onde laser, voie terrestre ou par satellite, comprenant les terminaux téléphoniques (13) d'un abonné appelant et d'un abonné appelé, par lequel l'on mesure dans lesdits réseaux, en amont du raccordement d'un abonné et de manière continue, le degré de saturation des lignes ou faisceaux de lignes de communication, les valeurs effectivement mesurées étant stockées dans la mémoire d'ordinateurs spécifiques dits de tarification (1) qui intègrent des algorithmes de calcul sous forme de programmes, mesures restant à disposition sur appel pour être converties en cas de besoin par lesdits ordinateurs en tarifs effectifs se rapportant à la communication individuelle, **caractérisé en ce que**
le degré de saturation effectif est mesuré à tout moment sur l'ensemble des liaisons,
les ordinateurs dits de tarification (1) possèdent dans leur mémoire des algorithmes de calcul sous forme de programmes prenant en compte le degré effectif de saturation pour déterminer le tarif de la communication effectivement applicable à une communication individuelle, algorithmes dans lesquels le critère de distance est remplacé par la mesure de la saturation sur toutes les sections d'une liaison, à savoir la ligne principale de numérotation et les liaisons transversales,
le tarif individuel effectif ainsi déterminé s'affiche sur le terminal téléphonique (13) de l'abonné appelant après que l'indicatif d'un réseau régional cible, appelé indicatif interurbain, a été composé complètement,
immédiatement après composition du dernier chiffre de l'indicatif du réseau régional cible, l'ordinateur dit de tarification (1) transmet sur le dispositif d'affichage du terminal téléphonique (13) de l'abonné appelant le tarif calculé sur la base de la dernière mesure du trafic en destination dudit réseau régional et en vigueur au moment de l'appel, après avoir composé l'indicatif du réseau cible, le système propose à l'abonné, avant de continuer la numérotation, une option de tarif maintenue durant une période déterminée pendant laquelle l'abonné peut soit interrompre ladite numérotation ou, s'il accepte ladite option de tarif, de la continuer et que
les coûts effectifs de la communication s'affichent de manière optique ou acoustique sur le terminal téléphonique (13) de l'abonné appelant et/ou appelé.

2. Procédé selon la revendication 1, **caractérisé en ce que**
le calcul du tarif effectif de la communication s'effectue au moyen d'un algorithme par affectation de paramètres appelés facteurs de pondération et que
en changeant lesdits paramètres, le procédé intègre des tarifs minima, maxima, spéciaux ainsi que des tarifs préférentiels pour consommation élevée et grands comptes.

3. Procédé selon la revendication 1 ou 2, **caractérisé en ce que**
les tarifs pondérés calculés à partir de groupes de mesure de la saturation (12, 12') sont transmis aux centraux téléphoniques correspondants et que
dans lesdits centraux téléphoniques, des ordinateurs dédiés à la combinaison de tarifs combinent les tarifs pondérés de l'ensemble des sections de la ligne de communication - liaisons transversales et principales - selon des paramètres particuliers à définir par l'opérateur du réseau concerné et transmettent lesdits tarifs nouvellement pondérés au niveau immédiatement supérieur.

4. Procédé selon l'une quelconque des revendications précédentes, **caractérisé en ce que**
comme grandeur de mesure du degré de saturation l'on détermine la consommation de courant de l'ordinateur de commutation ou de microprocesseurs correspondants par rapport à leur consommation de courant en veille et que la saturation est déterminée selon le sens directionnel à partir des données de signalisation mémorisées et analysées et qu'elle est ensuite convertie en valeurs de saturation.

5. Système de réalisation du procédé selon l'une quelconque des revendications précédentes, **caractérisé en ce que**
des dispositifs de mesure de trafic (2, 2') sont couplés avec les lignes ou faisceaux de lignes de communication (8, 8') entre les divers centraux téléphoniques (3 à 6 ou 3' à 6') reliés chacun à un ordinateur dit de tarification (1, 1'), qui, pour transmettre les valeurs de sortie, est lui-même relié au central téléphonique du niveau supérieur au sein de la hiérarchie des centraux téléphoniques,
les dispositifs de mesure de trafic (2') reliés aux ordinateurs de tarification (1, 1') des différents niveaux de la ligne de numérotation descendante sont connectés avec toutes les lignes transversales (10) au moyen de dispositifs de couplage (9) et que
à chaque central téléphonique situé au niveau au-dessus du central téléphonique local est associé un groupe de mesure de la saturation comprenant un précalculateur de tarifs (12) et un dispositif de mesure du trafic (2).

6. Système selon la revendication 5 **caractérisé en ce que**
un ordinateur de tarification (14) est intercalé entre le terminal téléphonique (13) de l'abonné appelant et le central téléphonique local (6) lui étant affecté et que
du côté de l'abonné appelé, un autre ordinateur de tarification est intercalé entre le central téléphonique local et le terminal téléphonique dudit abonné appelé.

7. Système selon l'une quelconque des revendications 5 ou 6 **caractérisé en ce que**
il envoie, au moyen de lignes commutées, y compris par canal radio, une information d'appel et de tarif au terminal téléphonique (13') de l'abonné appelé et que
l'information de tarif est envoyée en sens inverse sur le terminal téléphonique (13) de l'abonné appelant.

8. Système selon l'une quelconque des revendications 5 à 7 **caractérisé en ce que** les trains de bits sont dirigés sur les dispositifs de mesure du trafic (2, 2') et que
le dispositif de couplage (9) est de type capacitif, inductif, galvanique ou doté de circuits intégrés adéquats.

FIG. 1

Tarifgewicht

LMG

Tarifvor-Rechner — 12

Verkehrs-meßein-richtung — 2

11

Bitstrom (gerichtet)

ZVSt — 3

9

9

3' — ZVSt

Tarifgewicht

12' — Tarifvor-Rechner

11' — Verkehrs-meßein-richtung

2'

Bitströme (gerichtet)

8

8'

4 — HVSt

Tarifgewicht

LMG

Tarifvor-Rechner — 12

Verkehrs-meßein-richtung — 2

11

Bitstrom (gerichtet)

9

8

HVSt — 4'

Tarifgewicht

12' — Tarifvor-Rechner

11'

9

Bitstrom (gerichtet)

Verkehrs-meßein-nchtung — 2'

8'

LMG

5 — KVSt

Tarifgewicht

LMG

Tarifvor-Rechner — 12

Verkehrs-meßein-richtung — 2

11

Bitstrom (gerichtet)

9

8

KVSt — 5'

Tarifgewicht

8'

12' — Tarifvor-Rechner

11'

9

Bitstrom (gerichtet)

Verkehrs-meßein-richtung — 2'

LMG

6 — EVSt

10

EVSt — 6'

gewichtete Auslastung "vorwärts" (IFS)

gewichtete Auslastung "rückwärts"

14 — Tarifrechner "rufend"

7

13

Telefon mit (Groß)Display

7'

13'

Tarifrechner "gerufen" (IFS) — 14'

gewichteter und dynamisierter Kommunikationstarif

rufender Teilnehmer

Wählinformation + Tarifinformation "vorwärts"

Tarifinformation "rückwärts"

gerufener Teilnehmer

gewichteter und dynamisierter Kommunikationstarif

## FIG. 2

FIG. 3

FIG. 4

FIG. 5

FIG. 6

18

FIG. 7